# EUROPÄISCHE PATENTSCHRIFT

(11) **EP 0 615 073 B1**
(45) Veröffentlichungstag und Bekanntmachung des Hinweises auf die Patenterteilung: **13.12.1995**
(21) Anmeldenummer: 93104042.2
(22) Anmeldetag: 12.03.1993
(51) Int. Cl.: F16B 37/08, A47K 13/26

(54) **Kombination aus Schraubenmutter und Lochscheibe**
Nut and washer combination
Combinaison d'écran et rondelle

(43) Veröffentlichungstag der Anmeldung: 14.09.1994
(73) Patentinhaber: Abu-Plast Kunststoffbetriebe GmbH, D-96472 Rödental (DE)
(72) Erfinder: Bauer, Hilmar, Dipl.-Ing. (FH), W-8633 Rödental (DE)
(74) Vertreter: Klose, Hans, Dipl.-Phys.

(56) Entgegenhaltungen:
- DE-A- 2 723 058
- FR-A- 1 420 955
- FR-A- 2 613 789
- GB-A- 744 016
- US-A- 1 429 513
- US-A- 3 471 874
- US-A- 3 675 530
- US-A- 4 083 288

## Beschreibung

Die Erfindung betrifft eine Kombination aus einer Schraubenmutter und einer Lochscheibe gemäß dem Oberbegriff des Patentanspruchs 1. Eine Kombination dieser Bauart ist aus GB-A-744 016 bekannt.

In dieser GB-A-744 016 ist eine Schraubenmutter beschrieben, von der sich radial ein Handhebel zum Festziehen der Schraubenmutter erstreckt. Die Schraubenmutter ist als ein Kreissegment mit einer radialen Öffnung versehen, damit die Schraubenmutter von der Seite gegen einen Schraubenbolzen bewegt werden kann. Die Öffnung der Schraubenmutter wird durch mit der Schraubenmutter integral ausgebildete Arme begrenzt und hat zu einer Axialebene parallele Innenseiten, die in einem Abstand voneinander angeordnet sind, der etwas größer als der Durchmesser eines Schraubgewindes ist, das sich über 180° der Innenfläche der Schraubenmutter erstreckt. Das untere Ende der Schraubenmutter ist koaxial zu ihrem Gewinde teilweise kegelstumpfförmig verjüngt und liegt an einer entsprechenden, oberen Kegelstumpffläche eines auf einer Platte abgestützten Werkstücks an. Die Platte ist mit einer Bohrung versehen, durch die von unten der Schraubenbolzen eingesteckt ist.

Das Problem, einen in einer Bohrung axial beweglichen Gewindebolzen, der an einem Ende der Bohrung aus dieser heraustritt, schnell und einfach zu verspannen, so daß er in axialer Richtung der Bohrung nicht mehr beweglich ist, tritt insbesondere bei Befestigungsvorrichtungen für schwenkbare WC-Sitze auf. In einer üblichen Ausgestaltung haben diese Befestigungsvorrichtungen für schwenkbare WC-Sitze einen Achszapfen, mit dem sie in eine Durchgangsbohrung einer schwenkbaren Brille gesteckt werden, sowie weiter in eine sacklochartig ausgebildete Scharnierbohrung eines schwenkbaren Deckels. Die Befestigungsvorrichtungen werden daher üblicherweise paarweise verwendet. Die Achszapfen der Befestigungsvorrichtungen sind mit einem Auflageteller verbunden, an den sich ein sich senkrecht nach erstreckender Gewindebolzen anschließt. Dieser Gewindebolzen wird in eine Befestigungsbohrung einer WC-Schüssel eingeführt und üblicherweise von unten her verspannt. Dies geschieht in der Regel durch eine Flügelmutter, die von unten her über die gesamte Länge des aus der Befestigungsbohrung hervorstehenden Teils des Gewindebolzens geschraubt werden muß, bis sie zur Anlage kommt und festgezogen werden kann. Da die Befestigungsbohrungen der WC-Schüssel einbaubedingt üblicherweise in der Nähe einer Wand verlaufen, ist aufgrund der Höhe der WC-Schüssel in Bodennähe das Aufschrauben der Flügelmutter auf den überstehenden Teil des Gewindebolzens, bedingt durch- die beengten Raumverhältnisse, besonders mühsam und lästig. Infolgedessen wird der WC-Sitz in der Regel aus Bequemlichkeitsgründen und häufig auch zu Reinigungszwecken nach einmal erfolgter Erstmontage nicht wieder von der üblicherweise aus Porzellan gefertigten WC-Schüssel abgenommen, was jedoch aus Hygienegründen höchst erwünscht ist. Es sind zwar im Stand der Technik verschiedene Befestigungsvorrichtungen für schwenkbare WC-Sitze bekannt geworden, die diesem Übelstand abzuhelfen versuchen. Diese bekannten Befestigungsvorrichtungen für schwenkbare WC-Sitze weisen jedoch alle entweder den Nachteil auf, daß sie in der Herstellung zu aufwendig und daher für den durchschnittlichen Endverbraucher zu teuer sind, oder aber beim Abnehmen des WC-Sitzes von der WC-Schüssel zu Reinigungszwecken o.ä. das eigentliche Befestigungsteil der Befestigungsvorrichtung an der WC-Schüssel verbleibt, wodurch der angestrebte Effekt, die Reinigung der WC-Schüssel zu erleichtern, zunichte gemacht wird.

Der Erfindung liegt daher die Aufgabe zugrunde, eine Schraubenmutter mit einem radialen, zu ihrem Gewinde reichenden, über die gesamte Höhe der Mutter sich erstreckenden Schlitz so weiterzuentwickeln, daß ein Spannen eines in einer Bohrung axial beweglichen Gewindebolzens, der an einem Ende der Bohrung in axialer Richtung durch eine Anlagefläche formschlüssig fixierbar ist und an dem anderen Ende der Bohrung aus dieser heraustritt, mit hohen Anzugsmomenten ermöglicht wird, ohne daß bei den hohen Anzugsmomenten die Schraubenmutter von dem Gewindebolzen aufgrund der auftretenden Kräfte etwa radial zur Gewindeachse abrutscht.

Der Erfindung liegt weiterhin die Aufgabe zugrunde, eine Befestigungsvorrichtung für einen schwenkbaren WC-Sitz bereitzustellen, bei der ein sich senkrecht von einem Auflageteller nach unten durch eine Bohrung erstreckender Gewindebolzen mit einer erfindungsgemäß zu schaffenden Schraubenmutter schnell und einfach mit hohen Anzugsmomenten verspannbar ist, wobei die Schraubenmutter und gegebenenfalls zusätzliche Elemente kostengünstig zu fertigen sein sollen.

Die Aufgabe ist hinsichtlich ihres ersten Teils durch eine Kombination aus einer geteilten Schraubenmutter und einer Zentrier-Lochscheibe gelöst, bei der die Schraubenmutter an einem Gewindeende einen konzentrisch angeordneten Bund mit einer zur Achse der Schraubenmutter geneigten Zentrierfläche aufweist, wobei sich ferner an die Zentrierfläche nach außen hin eine kreisförmige Anlagefläche anschließt, und wobei die Innenwandung des Loches der Lochscheibe komplementär zu der Zentrierfläche geneigt verläuft.

Die erfindungsgemäße Lochscheibe wirkt mittels ihrer geneigten Innenwandung vorzugsweise in Form einer Kegelstumpfmantelfläche mit der Zentrierfläche des konzentrisch angeordneten Bundes der Schraubenmutter zusammen, wodurch die Schraubenmutter zentriert und ein Abrutschen der Schraubenmutter von dem Gewindebolzen aufgrund auftretender Kräfte beim Anziehen verhindert wird.

Der Außendurchmesser der Kegelstumpfmantelfläche der Lochscheibe, d. h. der Innenwandung, ist kleiner als der Außendurchmesser der Kegelstumpfmantelfläche der Zentrierfläche der Schraubenmutter. Hierdurch wird erreicht, daß der konzentrisch angeordnete, die Zentrierfläche aufweisende Bund der Schraubenmutter zusammengedrückt wird, wenn während des Anziehvorgangs der Kegelmantel der Zentrierfläche in den Kegelmantel der Innenwandung des Loches hineingedrückt wird. Hierdurch wird ein besonders fester Sitz der Schraubenmutter gewährleistet.

Es versteht sich von selbst, daß der Innendurchmesser der Lochscheibe geringfügig größer ist als der Außendurchmesser des Gewindebolzens, so daß die Lochscheibe einfach über den aus der Befestigungsbohrung hervorstehenden Teil des Gewindebolzens geschoben werden kann, während die Schraubenmutter in radialer Richtung unmittelbar unterhalb der Lochscheibe auf den Gewindebolzen gedrückt wird.

Weiterhin ist vorgesehen, daß die Innenwandung des Loches der Lochscheibe aus zwei jeweils von außen nach innen sich erstreckenden Kegelstumpfmantelflächen besteht. Hierdurch wird eine gleichwertige Ausbildung der beiden Seiten der Lochscheibe erreicht, d. h. es ist gleichgültig, in welcher Richtung die Lochscheibe auf den aus der Gewindebohrung hervorragenden Gewindebolzen aufgeschoben wird, da in jedem Fall eine der beiden Kegelstumpfmantelflächen der anzuziehenden Schraubenmutter zugekehrt ist.

Weiterhin wird vorgeschlagen, daß die geometrische Grundform der Schraubenmutter einen geraden, die Gewindebohrung aufnehmenden Kreiszylinder aufweist, an den sich eine die Anlagefläche aufweisende Kreisschreibe anschließt. Vorzugsweise ist die die Anlagefläche aufweisende Kreisscheibe mit einem radial verlaufenden, gegenüber dem Schlitz der Schraubenmutter angeordneten Entlastungsspalt versehen.

Diese Ausgestaltung der erfindungsgemäßen Schraubenmutter bewirkt eine stabile Konstruktion und trotzdem wird durch den Entlastungsspalt erreicht, daß die zum Aufbiegen des radialen Schlitzes notwendigen Kräfte klein gehalten werden, so daß der Aufsteckvorgang der Schraubenmutter auf den Gewindebolzen vereinfacht wird.

Die die Anlagefläche aufweisende Kreisscheibe kann weiterhin um einen rechtwinklig zu dem Schlitz angeordnetes Kreissegment verkürzt sein, wodurch das Aufstecken der Schraubenmutter auf den Gewindebolzen vereinfacht und Material gespart wird.

Des weiteren wird vorgeschlagen, daß die Schraubenmutter zwei flügelartige Griffflächen aufweist, die vorzugsweise in einer Ebene senkrecht zu der die Schraubenmutterachse enthaltenden Ebene des Schlitzes angeordnet sind und die außerdem mit dem Kreiszylinder verbunden sein und sich über die gesamte freie Höhe desselben erstrecken können. Eine solche Ausgestaltung der erfindungsgemäßen Schraubenmutter ermöglicht eine Montage derselben von Hand, ohne daS spezielles Werkzeug erforderlich wäre.

Vorzugsweise ist weiterhin vorgesehen, daß die Schraubenmutter und die Lochscheibe im Spritzgießverfahren aus einem Kunststoff hergestellt sind, wobei die Zentrierfläche und die Innenwandung bei einer bevorzugten Ausgestaltungsform unter einem Winkel von 30° geneigt sind.

Hinsichtlich ihres zweiten Teils ist die Lösung der Aufgabe bei einer gattungsgemäßen Befestigungsvorrichtung für einen schwenkbaren WC-Sitz dadurch gekennzeichnet, daß das auf den Gewindebolzen von unten aufschraubbare Befestigungselement eine vorstehend beschriebene, erfindungsgemäße Kombination aus Schraubenmutter und Lochscheibe ist.

Bevorzugt ist bei einer erfindungsgemäßen Befestigungsvorrichtung für einen schwenkbaren WC-Sitz darüber hinaus vorgesehen, daß der Auflageteller, der sich senkrecht zu diesem nach unten erstreckende Gewindebolzen und der mit Abstand von dem Auflageteller waagrecht angeordnete Achszapfen einstückig ausgebildet und im Spritzgießverfahren aus Kunststoff hergestellt sind. Dabei sind vorzugsweise auch die Schraubenmutter und die Lochscheibe im Spritzgießverfahren aus Kunststoff hergestellt, so daß eine kostengünstige Befestigungsvorrichtung geschaffen wird.

Bei einer etwas stabileren Ausführungsform kann erfindungsgemäß vorgesehen sein, daß der Gewindebolzen in einen gewindelosen, abgewinkelten, den Achszapfen bildenden Teil übergeht und daß der Auflageteller auf den Gewindebolzen aufschraubbar ist, wobei vorzugsweise sowohl Gewindebolzen wie Auflageteller aus Metall bestehen.

Die Erfindung wird im Folgenden anhand der Zeichnung näher erläutert. In der Zeichnung zeigen:
- Fig. 1: eine Ansicht der erfindungsgemäßen Schraubenmutter in Achsrichtung von unten,
- Fig. 2: eine gemäß Linie II-II in Fig. 4 teilweise geschnittene Ansicht der Schraubenmutter gemäß Fig. 1 in Richtung des Schlitzes,
- Fig. 3: eine Seitenansicht der Schraubenmutter,
- Fig. 4: eine Draufsicht auf die Schraubenmutter,
- Fig. 5: eine Draufsicht der erfindungsgemäßen Lochscheibe,
- Fig. 6: einen Längsschnitt durch die erfindungsgemäße Lochscheibe,
- Fig. 7: eine Ansicht einer schematisch dargestellten WC-Schüssel mit einem aufliegenden WC-Sitz, der mittels einer erfindungsgemäßen Befestigungsvorrichtung unter Verwendung der erfindungsgemäßen Kombination aus Schraubenmutter und Lochscheibe mit der WC-Schüssel verbunden ist, wobei die Schraubenmuttern schematisch zu einem Zeitpunkt kurz vor ihrer Montage dargestellt sind, und
- Fig. 8: die Darstellung gemäß Fig. 7 zu einem Zeitpunkt, zu dem die erfindungsgemäßen Schraubenmuttern auf die Gewindebolzen der erfindungsgemäßen Befestigungsvorrichtungen aufgesetzt sind.

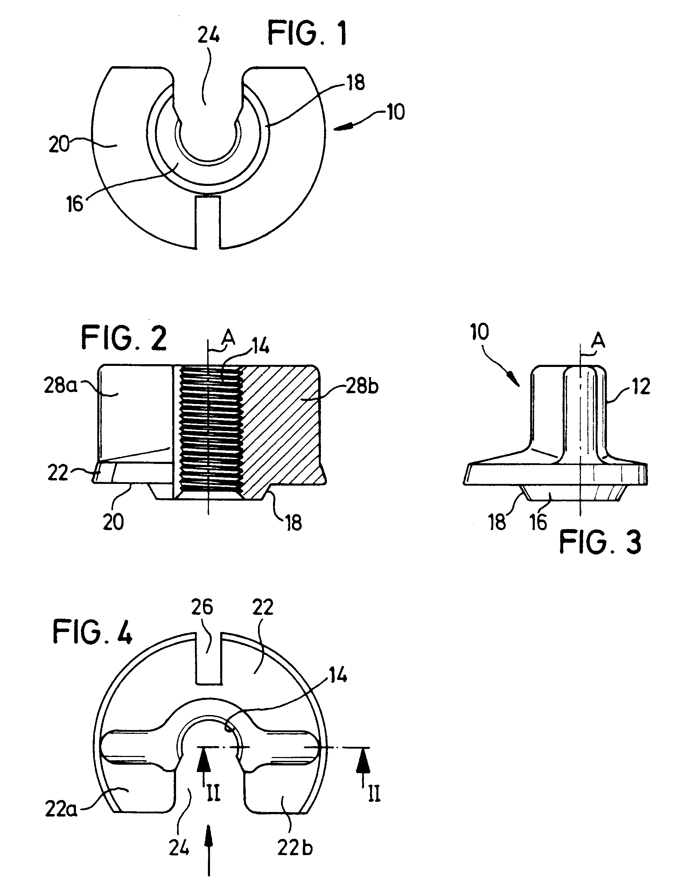

Ein Ausführungsbeispiel einer erfindungsgemäßen Schraubenmutter wird zunächst anhand der Fig. 1 bis 4 näher erläutert. Eine derartige Schraubenmutter 10 weist einen kreiszylinderförmigen Körper 12 auf, der ein konzentrisch zu seiner Achse A angeordnetes Innengewinde 14 trägt. An einem unteren Ende des Gewindes 14 weist die Schraubenmutter 10 einen konzentrisch zur Achse A der Schraubenmutter angeordneten Bund 16 auf, der die geometrische Grundform eines Kegelstumpfes hat. In radialer Richtung wird der Bund durch eine Zentrierfläche 18 begrenzt, die geometrisch gesehen eine Kegelstumpfmantelfläche darstellt. Der spitze Winkel des Kegelstumpfes beträgt 60°, d. h. die Kegelstumpfmantelfläche, also die Zentrierfläche, ist unter einem Winkel von 30° zur Achse A der Schraubenmutter geneigt. An die Zentrierfläche 18 schließt sich nach außen hin eine kreisringförmige Anlagefläche 20 an, die zu einer mit dem Zylinderkörper 12 verbundenen Kreisscheibe 22 gehört. Wie die Fig. 1 und 4 zeigen, weist die erfindungsgemäße Schraubenmutter einen radialen, zu ihrem Gewinde 14 reichenden Schlitz 24 auf, der sich über die gesamte Höhe der Schraubenmutter erstreckt, wie Fig. 2 zeigt. Der Schlitz 24 ist hinsichtlich seiner Größe und Gestalt so gewählt, daß der von dem Gewinde 14 verbleibende Umfangswinkel größer als 180° ist, d. h. das von dem Schlitz aus dem Umfang des Gewindes herausgeschnittene Kreissegment weist einen spitzen Winkel auf, der kleiner ist als 180°, beispielsweise 160°. Der Schlitz erstreckt sich auch durch die Kreisscheibe 22. Wenn die erfindungsgemäße Schraubenmutter auf einen Gewindebolzen aufgesetzt und mit radialem Druck beaufschlagt wird, werden die seitlichen Bereiche 22a und 22b der Kreisscheibe 22 und die angrenzenden Bereiche des zylindrischen Hauptkörpers 12 aufgedrückt, was zusätzlich durch einen Entlastungsspalt 26 erleichtert wird. Der Entlastungsspalt 26 ist dem Schlitz 24 gegenüberliegend angeordnet.

Die Schraubenmutter weist weiterhin zwei in einer Ebene angeordnete, flügelartige Griffflächen 28a und 28b auf, mittels derer die Schraube angezogen bzw. verdreht werden kann, ohne daß ein spezielles Werkzeug erforderlich ist. Die Flügel bzw. Griffflächen 28a und 28b sind in einer Ebene angeordnet, die rechtwinklig zu der die Achse A der Schraubenmutter enthaltenden Ebene des Schlitzes 24 verläuft. Durch die gegenseitige Anordnung von Entlastungsspalt 26, Schlitz 24 und Griffflächen 28a und 28b wird eine gute Stabilität der Schraube bei gleichzeitig guter Werkstoffausnutzung erreicht, so daß die Schraube insbesondere auch im Spritzgießverfahren hergestellt werden kann.

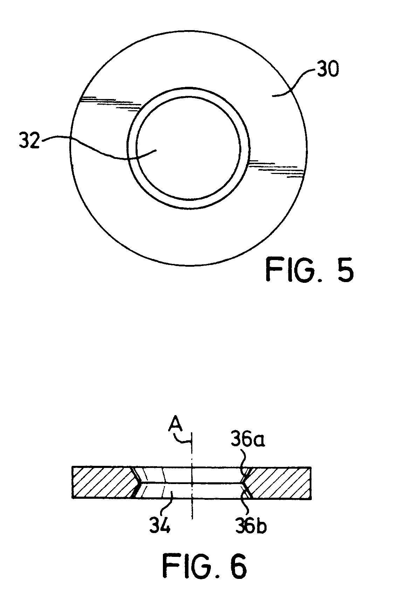

Die Fig. 5 und 6 zeigen die erfindungsgemäße Lochscheibe. Die Lochscheibe 30 weist ein konzentrisch angeordnetes Loch 32 auf, dessen Innenwandung 34 aus zwei jeweils nach außen hin sich erweiternden Kegelstumpfmantelflächen 36a und 36b besteht. Der Neigungswinkel der Kegelstumpfmantelflächen 36a und 36b gegenüber der Mittelachse A beträgt wie bei dem in den Fig. 1 bis 4 dargestellten Ausführungsbeispiel einer erfindungsgemäßen Schraubenmutter 30°, während der Außendurchmesser der Kegelstumpfmantelflächen geringfügig kleiner ist als der größte Durchmesser der Kegelstumpfmantelfläche 18 des Bundes 16. Beim Anziehen der Schraube kommen die Zentrierfläche in Form der Kegelstumpfmantelfläche 18 mit der Kegelstumpfmantelfläche 36a der Innenwandung 34 der Lochscheibe 30 in Kontakt oder aber - bei einer umgedrehten Lage der Lochscheibe 30 - mit der identisch ausgeformten Kegelstumpfmantelfläche 36b. Da die Kegelstumpfmantelfläche 18 bzw. die Zentrierfläche im entlasteten Zustand der Schraube einen etwas größeren, durchschnittlichen Durchmesser aufweist als die entsprechende Kegelstumpfmantelfläche der Lochscheibe 30, wird der Bund 16 im Bereich des Schlitzes 24 zusammengedrückt, wenn die Zentrierfläche, d. h. die Kegelstumpfmantelfläche 18 des Bundes 16, beim Vorwärtsdrehen, also beim Anziehen der Schraubenmutter, weiter in die komplementäre Kegelstumpfmantelfläche 36a, 36b der Lochscheibe 30 hineinbewegt wird. Hierdurch wird die Schraubenmutter zentriert und ein Abrutschen der Schraubenmutter von dem in den Fig. 1 bis 6 nicht dargestellten Gewindebolzen wird verhindert.

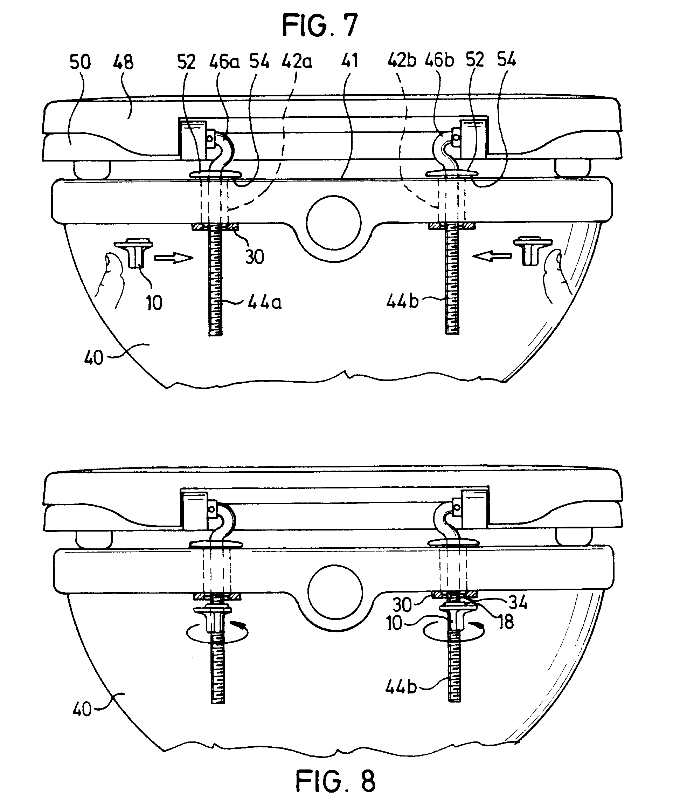

Fig. 7 zeigt eine Anwendung der erfindungsgemäßen Kombination aus Schraubenmutter und Lochscheibe im Rahmen einer erfindungsgemäßen Befestigungsvorrichtung für einen schwenkbaren WC-Sitz. Eine WC-Schüssel 40 weist zwei Befestigungsbohrungen 42a und 42b auf, in denen axial verschiebbar Gewindebolzen 44a und 44b angeordnet sind. In ihrem oberen Bereich gehen die Gewindebolzen in Achszapfen 46a und 46b über, die waagrecht verlaufen und in Bohrungen bzw. Durchgangslöcher eines schwenkbaren Deckels 48 und einer Brille 50 eingreifen. Auf dem Gewinde der Gewindebolzen 42a, 42b ist jeweils ein als Gewinderosette ausgebildeter Auflageteller 52 mit einer Anlagefläche 54 drehbar angeordnet. Durch Verdrehen des Auflagetellers 52 kann die Stellung des Auflagetellers auf dem jeweiligen Gewindebolzen 44a, 44b eingestellt werden, so daß die Befestigungsvorrichtung universell geeignet ist für beliebige Ausführungen von WC-Sitzen, d. h. der Abstand der Achszapfen 46a, 46b über der Oberfläche 41 der WC-Schüssel 40 ist so einstellbar.

Die Gewindebolzen 44a und 44b werden durch die Anlageflächen 54 in axialer Richtung formschlüssig fixiert. Die Länge der Gewindebolzen 44a und 44b ist so bemessen, daß die Befestigungsvorrichtung universell geeignet ist für WC-Schüsseln mit unterschiedlich tiefen Befestigungsbohrungen 42a und 42b. Die Gewindebolzen 44a und 44b werden durch jeweils eine Kombination aus einer erfindungsgemäßen Lochscheibe 30 und einer Schraubenmutter 10 fixiert. Wie Fig. 7 schematisch zeigt, kann dabei die jeweilige Schraubenmutter 10 unmittelbar unterhalb der Lochscheibe 30 in radialer Richtung auf den jeweiligen Gewindebolzen 44a, 44b aufgesteckt werden, wodurch es sich erübrigt, den gesamten Totweg der aus der Gewindebohrung hervorragenden Gewindebolzen durch Drehen der Schraubenmutter zurückzulegen.

Wie Fig. 8 zeigt, kommt beim Festziehen der erfindungsgemäßen Schraubenmutter jeweils die Zentrierfläche 18 in Form einer Kegelstumpfmantelfläche mit dem nach unten gerichteten Teil der Innenwandung 34 der Lochscheibe 30 in Kontakt, wodurch die Schraubenmutter auch beim Anziehen auf dem jeweiligen Gewindebolzen 44a, 44b zentriert bleibt und hohe Anzugsmomente ermöglicht werden, so daß ein fester Sitz des WC-Sitzes auf der WC-Schüssel 40 gewährleistet ist.

Um den WC-Sitz zu Reinigungszwecken abzunehmen, ist es lediglich notwendig, die Schraubenmuttern 10 einige Umdrehungen zu lösen, bis der Bund 16 aus dem axialen Bereich der Lochscheibe 30 herausgedreht ist, die Schraubenmuttern in radialer Richtung von den jeweiligen Gewindebolzen und den WC-Sitz von der WC-Schüssel 40 abzunehmen, wobei die Gewindebolzen 44a und 44b aus den entsprechenden Bohrungen 42a und 42b herausgleiten. Eine Reinigung der WC-Schüssel 40 ist sodann ohne weiteres und gründlich möglich.

Während die erfindungsgemäße Kombination aus Schraubenmutter und Lochscheibe insbesondere dazu geeignet ist, eine erfindungsgemäße Befestigungsvorrichtung für einen schwenkbaren WC-Sitz zu realisieren, ist ihr Anwendungsbereich keinesfalls hierauf beschränkt.

## Patentansprüche

1. Kombination aus einer Schraubenmutter (10) und einer Lochscheibe (30) zum Verspannen eines in einer Bohrung (42a, 42b) axial beweglichen Gewindebolzens (44a, 44b), der an einem Ende der Bohrung (42a, 42b) in axialer Richtung durch eine Anlagefläche (54) formschlüssig fixierbar ist und am anderen Ende der Bohrung (42a, 42b) aus dieser heraustritt, wobei die Schraubenmutter (10) einen über ihre gesamte Höhe reichenden, sich radial zu ihrem Gewinde (14) erstreckenden Schlitz (24) sowie an einem Gewindeende einen konzentrisch angeordneten Bund (16) mit einer zur Achse (A) der Schraubenmutter (10) geneigten Zentrierfläche (18) aufweist, und die Innenwandung (34) des Loches (32) der Lochscheibe (30) komplementär zu der Zentrierfläche (18) geneigt verläuft;die Zentrierfläche (18) und Innenwandung (34) des Loches (32) Kegelstumpfmantelflächen sind; und der Außendurchmesser der Kegelstumpfmantelfläche (36a, 36b) der Lochscheibe (30) kleiner ist als der Außendurchmesser der Kegelstumpfmantelfläche der Zentrierfläche (18); dadurch gekennzeichnet, daß die Innenwandung (34) des Loches (32) der Lochscheibe (30) aus zwei sich jeweils nach außen erweiternden Kegelstumpfmantelflächen (36a, 36b) besteht; die geometrische Grundform der Schraubenmutter (10) einen geraden, die Gewindebohrung (14) aufnehmenden Kreiszylinder (12) aufweist, an den sich nach außen hin eine eine Anlagefläche (20) aufweisende Kreisscheibe (22) anschließt; die einen radial verlaufenden, gegenüber dem Schlitz (24) der Schraubenmutter (10) angeordneten Entlastungsspalt (26) aufweist und um ein rechtwinklig zu dem Schlitz (24) angeordnetes Kreissegment verkürzt ist; die Schraubenmutter (10) zwei flügelartige Griffflächen (28a, 28b) aufweist, die in einer Ebene senkrecht zu der die Schraubenmutterachse (A) enthaltenden Ebene des Schlitzes (24) angeordnet, mit dem Kreiszylinder (12) verbunden sind und sich über die gesamte freie Höhe desselben erstrecken; die Schraubenmutter (10) und die Lochscheibe (30) im Spritzgießverfahren aus Kunststoff hergestellt sind, und die Zentrierfläche (18) und die Innenwandung (34) unter einem Winkel von 30° geneigt sind.

2. Befestigungsvorrichtung für einen schwenkbaren WC-Sitz (48, 50) mit einem Auflageteller (52), einem sich senkrecht zu diesem nach unten erstreckenden Gewindebolzen (44a, 44b), einem mit Abstand von dem Auflageteller waagrecht angeordneten Achszapfen (46a, 46b) und einem auf den Gewindebolzen aufschraubbaren Befestigungselement, dadurch gekennzeichnet, daß das Befestigungselement eine Kombination aus Schraubenmutter (10) und Lochscheibe (30) nach Anspruch 1 ist.

3. Befestigungsvorrichtung für einen schwenkbaren WC-Sitz nach Anspruch 2, dadurch gekennzeichnet, daß der Auf lageteller, der sich senkrecht zu diesem nach unten erstreckende Gewindebolzen und der mit Abstand von dem Auflageteller waagrecht angeordnete Achszapfen ein stückig ausgebildet und im Spritzgießverfahren aus einem Kunststoff hergestellt sind.

4. Befestigungsvorrichtung für einen schwenkbaren WC-Sitz nach Anspruch 2, dadurch gekennzeichnet, daß der Gewindebolzen (44a, 44b) in einen gewindelosen, abge winkelten, den Achszapfen bildenden Teil (46a, 46b) übergeht und daß der Auflageteller (52) auf den Gewindebolzen aufschrauhbar ist.

5. Befestigungsvorrichtung für einen schwenkbaren WC-Sitz nach Anspruch 4, dadurch gekennzeichnet, daß Gewindebolzen (44a, 44b) und Auflageteller (52) aus Metall bestehen.

## Claims

1. Combination of a nut (10) and a washer (30) for restraining a bolt (44a, 44b), which is axially movable in a bore (42a, 42b) and which may be form-lockingly fixed in position in the axial direction at one end of the bore (42a, 42b) by an engagement surface (54) and, at the other end of the bore (42a, 42b) passes out of it, whereby the nut (10) has a slot (24), which extends over its entire height and extends radially to its thread (14), and, at one end of the thread, a concentrically disposed collar (16) with a centring surface (18) inclined to the axis (A) of the nut (10) and the inner wall (34) of the hole (32) in the washer (30) extends inclined at an angle complementary to the centring surface (18); the centring surface (18) and the inner wall (34) of the hole (32) are frustoconical surfaces; and the external diameter of the frustoconical surface (36a, 36b) on the washer (30) is smaller than the external diameter of the frustoconical surface of the centring surface (18); characterised in that the inner wall (34) of the hole (32) in the washer (30) comprises two outwardly diverging frustoconical surfaces (36a, 36b); the basic geometrical shape of the nut (10) has a straight circular cylinder (12), which contains a threaded bore (14) and adjoining which in the outward direction there is a circular disc (22) having an engagement surface (20); which has a radially extending unloading gap (26) arranged opposite to the slot (24) in the nut (10) and is shortened by a circular segment arranged at right-angles to the slot (24); the nut (10) has two wing-like gripping surfaces (28a, 28b) which are disposed in a plane perpendicular to the plane of the slot (24) passing through the nut axis (A) and are connected to the circular cylinder (12) and extend over the entire free height of the same; the nut (10) and the washer (30) are manufactured from plastic material in an injection moulding process and the centring surface (18) and the inner wall (34) are inclined at an angle of 30°.

2. Fastening device for a pivotable WC seat (48, 50) with a support plate (52), a bolt (44a, 44b) extending downwardly perpendicular to it, a pivot pin (46a, 46b) arranged horizontally and spaced from the support plate and a fastening element screwable onto the bolt, characterised in that the fastening element is a combination of a nut (10) and washer (30) as claimed in Claim 1.

3. Fastening device for a pivotable WC seat as claimed in Claim 2, characterised in that the support plate, the bolt extending downwardly perpendicular to it and the pivot pin arranged horizontally spaced from the support plate are of one-piece construction and are manufactured from a plastics material in an injection moulding process.

4. Fastening device for a pivotable WC seat as claimed in Claim 2, characterised in that the bolt (44a, 44b) merges into an unthreaded, angled portion (46a, 46b) constituting the pivot pin and that the support plate (52) is screwable onto the bolt.

5. Fastening device for a pivotable WC seat as claimed in Claim 4, characterised in that the bolt (44a, 44b) and support plate (52) comprise metal.

## Revendications

1. Combinaison d'un écrou (10) et d'une rondelle (30) pour le serrage d'un goujon fileté (44a, 44b) mobile axialement dans un trou (42a, 42b), se fixant contre une extrémité du trou (42a, 42b) en direction axiale par complémentarité de formes au moyen d'une surface d'appui (54) et débordant du trou (42a, 42b) à l'autre extrémité de ce dernier, l'écrou (10) comprenant une fente (24) se prolongeant sur la totalité de sa hauteur, orientée radialement par rapport à son taraudage (14), ainsi qu'un boudin (16) dispose concentriquement à une extrémité du taraudage et présentant une surface de centrage (18) qui est inclinée sur l'axe (A) de l'écrou (10) et la paroi intérieure (34) du trou (32) de la rondelle (30 ayant une inclinaison qui est complémentaire de celle de la surface de centrage (18); la surface de centrage (18) et la paroi intérieure (34) du trou (32) étant des enveloppes de tronc de cône ; et le diamètre extérieur de l'enveloppe de tronc de cône (36a, 36b) de la rondelle (30) est plus petit que le diamètre extérieur de l'enveloppe de tronc de cône de la surface de centrage (18); caractérisée en ce que la paroi intérieure (34) du trou (32) de la rondelle (30) se compose de deux enveloppes de tronc de cône (36a, 36b) qui s'élargissent vers l'extérieur ; la forme géométrique de base de l'écrou (10) présentant celle d'un cylindre droit à base circulaire (12) logeant le trou taraudé (14) et prolongé vers l'extérieur par un disque (22) qui présente une surface d'appui (20), qui comporte une entaille de soulagement (26) orientée radialement et disposée du côté opposé à celui de la lente (24) de l'écrou (10) et qui est raccourci d'un segment de cercle qui est perpendiculaire à la lente (24); l'écrou (10) comportant deux surfaces de prise en forme d'ailettes (28a, 28b) qui sont disposées dans un plan perpendiculaire au plan de la lente (24) qui passe par l'axe (A) de l'écrou, qui sont reliées au cylindre à base circulaire (12) et se prolongent sur la totalité de la hauteur libre de celui-ci ; l'écrou (10) et la rondelle (30) sont réalisés en matière plastique par un procédé de moulage par injection et la surface de centrage (18) ainsi que la paroi intérieure (34) sont inclinées sous un angle de 30°.

2. Dispositif de fixation d'un siège rabattable de WC (48, 50) comprenant une plaquette d'appui (52), un goujon fileté (44a, 44b) orienté vers le bas perpendiculairement à celle-ci, un tourillon (46a, 46b) disposé horizontalement à distance de la plaquette d'appui ainsi qu'un élément de fixation se vissant sur le goujon fileté, caractérisé en ce que l'élément de fixation est une combinaison de l'écrou (10) et de la rondelle (30) selon la revendication 1.

3. Dispositif de fixation d'un siège rabattable de WC selon la revendication 2, caractérisé en ce que la plaquette d'appui, le goujon fileté qui est disposé vers le bas perpendiculairement à celle-ci et le tourillon disposé horizontalement à distance de la plaquette d'appui sont en une pièce et réalisés en matière plastique par un procédé de moulage par injection.

4. Dispositif de fixation d'un siège rabattable de WC selon la revendication 2, caractérisé en ce que le goujon fileté (44A, 44b) se prolonge en une partie coudée sans filetage, formant le tourillon (46a, 46b) et en ce que la plaquette d'appui (52) se visse sur le goujon fileté.

5. Dispositif de fixation d'un siège rabattable de WC selon la revendication 4, caractérisé en ce que le goujon fileté (44a, 44b) et la plaquette d'appui (52) sont en métal.
